# EUROPEAN PATENT SPECIFICATION

(11) **EP 3 783 942 B1**
(45) Date of publication and mention of the grant of the patent: **07.01.2026**
(21) Application number: 19789151.8
(22) Date of filing: 16.04.2019
(51) Int. Cl.: H04W 16/28, H04B 7/024, H04B 7/0413, H04B 7/0426, H04B 7/0452, H04B 7/0456, H04B 7/06, H04J 99/00, H04W 28/16, H04W 16/08, H04W 16/10, H04W 24/02, H04W 52/26, H04W 28/22, H04W 72/04, H04W 88/08, H04W 52/42

(54) **BASE STATION DEVICE AND COMMUNICATION METHOD**
BASISSTATIONSVORRICHTUNG UND KOMMUNIKATIONSVERFAHREN
DISPOSITIF DE STATION DE BASE ET PROCÉDÉ DE COMMUNICATION

(30) Priority: 20.04.2018 JP 2018081835
(43) Date of publication of application: 24.02.2021
(73) Proprietor: NTT DOCOMO, INC., Chiyoda-ku Tokyo 100-6150 (JP)
(72) Inventor: MASHINO, Jun, Tokyo 100-6150 (JP); OKUYAMA, Tatsuki, Tokyo 100-6150 (JP); SUYAMA, Satoshi, Tokyo 100-6150 (JP)
(74) Representative: Hoffmann Eitle
(86) International application number: PCT/JP2019/016366
(87) International publication number: WO 2019/203244

(56) References cited:
- US-A1- 2009 016 263
- ATSUSHI MASUNO, TATSUKI OKUYAMA, SATOSHI SUYAMA, YUKIHIKO OKUMURA: "Uplink Transmission Power Reduction by Using Low SHF Band Massive MIMO for 5G", IEICE TECHNICAL REPORT, vol. 117, no. 11, 17 April 2017 (2017-04-17), pages 119 - 124, XP009523264, ISSN: 0913-5685

## Description

### Technical Field

The present disclosure relates to a base station device and a communication method.

### Background Art

Long Term Evolution (LTE) has been specified for achieving a higher data rate, lower latency, and the like in a Universal Mobile Telecommunication System (UMTS) network (see Non-Patent Literature (hereinafter referred to as "NPL") 1). Future systems beyond 4th generation mobile communication systems (4G) such as LTE have also been studied for achieving a broader bandwidth and a higher speed. Such future systems are called 5th generation mobile communication systems (5G) or the like.

In 5G, exploitation of broadband frequency resources by utilization of high-frequency bands, and beamforming and spatial multiplexing based on Massive Multiple Input Multiple Output (MIMO) techniques utilizing super multi-element antennas make it possible to achieve a user throughput as high as 10 Gbps that is much higher than those achieved by conventional mobile communication systems. Moreover, multiuser MIMO utilizing the plentiful antenna elements makes it possible to achieve high-capacity communication by multiple access in a spatial layer. US 2009/0016263 relates to a wireless base station performing spatial multiplexing and a terminal equipment responding to the spatial multiplexing

### Citation List

### Non-Patent Literature

NPL 1
   3GPP TS 36.300 v13.4.0, "Evolved Universal Terrestrial Radio Access (E-UTRA) and Evolved Universal Terrestrial Radio Access Network (E-UTRAN); Overall description; Stage 2 (Release 13)," June 2016
NPL 2
   Mashino et al., "Uplink Transmission Power Reduction by Using Low SHF Band Massive MIMO for 5G," IEICE Tech. Rep., vol. 117, No. 11, RCS2017-23, pp. 119-124, April, 2017

### Summary of Invention

### Technical Problem

Since application of beamforming by a base station which includes a super multi-element antenna increases the received Signal-Noise Ratio (SNR) of a UL signal from a radio communication terminal (hereinafter, referred to as "terminal"), the transmit power of the terminal can be reduced. However, such reduction in transmit power of the terminal by beamforming by the base station is limited by various causes. There are also limitations on an increase in number of antenna elements due to restricted places for installing base stations, balance between the traffic demand and the production cost, and/or the like, for example.

An object of the present disclosure is to provide a base station device and a communication method which make it possible to reduce the transmit power of a terminal.

### Solution to Problem

The object of the invention is achieved by the subject-matter of the independent claims. Advantageous embodiments are defined in the dependent claims. Further examples are provided for facilitating the understanding of the invention. A base station device according to one aspect of the present disclosure includes: at least one reception point that includes a plurality of antennas; and a control section configured to select a plurality of terminals that transmit uplink signals to be received while space-division multiplexed by the plurality of antennas, wherein the control section is configured to control a ratio between a number of first terminals and a number of second terminals in selecting the plurality of terminals, the second terminals being terminals whose rate of the uplink signals is higher than a rate of the uplink signals of the first terminals, the ratio being controlled depending on a target transmit power (Po) configured for the first terminals;wherein:controlling the ratio includes relatively increasing the number of the first terminals among the plurality of terminals; and the control section is configured to determine the number of the first terminals and a number of the reception points (Ns) to be coordinated, the number of the first terminals and the number of the reception points (Ns) to be coordinated being determined using information on a predetermined combination of the ratio and the number of the reception points to be coordinated, the predetermined combination being a combination for which a system throughput is maximized at the target transmit power according to a combination table associating the target transmit power (Po), the number of first terminals, the number of second terminals and the number of the reception points (Ns).

### Advantageous Effects of Invention

According to the present disclosure, the transmit power of a terminal can be reduced.

### Brief Description of Drawings

FIG 1 is an explanatory view for explaining terminal groups in the 5G era;
FIG 2 illustrates an example of a configuration of a communication system according to Embodiment 1;
FIG 3 illustrates an example of a block configuration of a Centralized Unit (CU) and a BaseBand Unit (BBU) according to Embodiment 1;
FIG 4 illustrates an example of a block configuration of a terminal according to Embodiment 1;
FIG 5A illustrates an example where low-speed terminals and high-speed terminals are accommodated by space division multiplexing in multiuser MIMO according to Embodiment 1;
FIG 5B illustrates an example where low-speed terminals and high-speed terminals are accommodated by space division multiplexing in multiuser MIMO according to Embodiment 1;
FIG 6A illustrates an example of a configuration of a communication system according to Embodiment 2;
FIG 6B illustrates an example of the configuration of the communication system according to Embodiment 2;
FIG 7 is a flowchart illustrating an example of processing for determining the number of accommodated low-speed terminals and the number of BBUs for site coordination according to Embodiment 2;
FIG 8 is a flowchart illustrating an example of processing for determining the number of accommodated low-speed terminals and the number of BBUs for site coordination according to Embodiment 2;
FIG 9 illustrates an example of a combination table according to Embodiment 2;
FIG 10 illustrates an example of a computer simulation result related to the communication system according to Embodiment 2; and
FIG 11 illustrates an example of hardware configuration of the CU, BBU, and terminal according to Embodiment 2.

### Description of Embodiments

Hereinafter, an embodiment of the present disclosure will be described with reference to the accompanying drawings.

Note that, the reference signs such as those in "BBU 3a" and "BBU 3b" may be used to describe elements of the same kind while distinguishing them from each other, and common numbers of the reference signs such as that in "BBUs 3" may be used by itself to describe the elements of the same kind without distinguishing them from each other.

### (Embodiment 1)

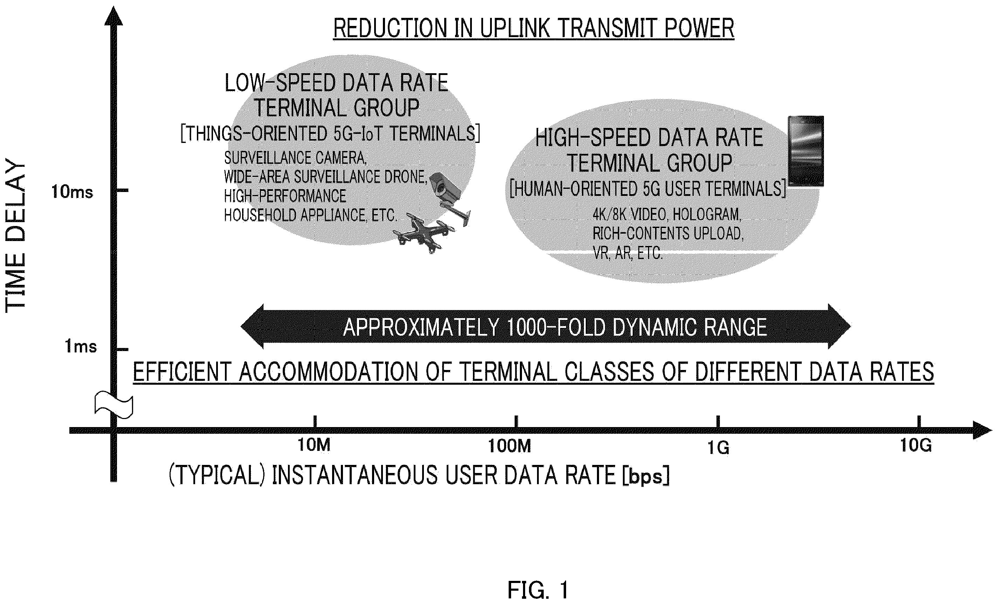

FIG 1 is an explanatory view for explaining terminal classes in the 5G era.

It is expected in the 5G era that communication without intervention by humans such as represented by Internet of Things (IoT) spreads in addition to human-oriented communication. Taking into consideration the overhead cost for multiple access, it cannot be said that accommodation of IoT terminals of 5G is indispensable. However, there has been a need for reducing a shortage of radio resources in the conventional mobile communication systems, such as 4G and the like. One method for satisfying this need is to accommodate low data rate terminals (hereinafter, referred to as "low-speed terminals") whose target transmission rates are from several Mbps to tens of Mbps in a high-capacity 5G system in which high data rate terminals (hereinafter, referred to as "high-speed terminals") whose target transmission rates are from several hundred Mbps to several Gbps are accommodated. That is, efficient accommodation of the terminal classes of different data rates is required. Note that, the terminal classes may be identified by indicators the same as those for QoS service classes, for example.

The low-speed terminals may also be referred to as IoT terminals. Examples of the IoT terminals include surveillance cameras, wide-area surveillance drones, and high-performance household appliances. The high-speed terminals may also be referred to as "user terminals." Examples of the user terminals include 4K/8K video terminals, hologram terminals, rich-contents upload terminals, Virtual Reality (VR) terminals, and Augmented Reality (AR) terminals.

An IoT use case in which a plurality of low-speed terminals are distributed and arranged in various fields can be considered. In this case, the low-speed terminals are required to be utilized for a long time without a commercial power source. That is, it is necessary to reduce the power consumption of each of the low-speed terminals. Factors constituting the power consumption of the terminal include a transmit power of an uplink (UL) signal. Thus, reduction in transmit power of the UL signal can result in a reduction in power consumption of the low-speed terminal.

### <System Configuration>

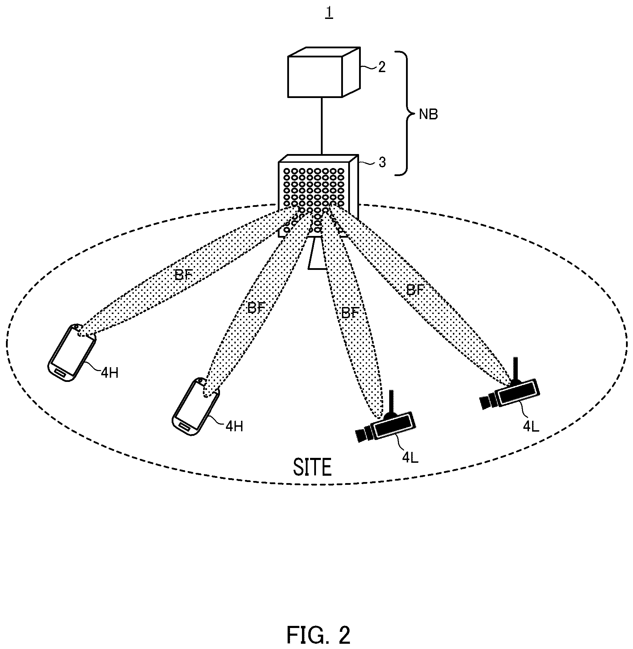

FIG 2 illustrates an example of a configuration of a communication system according to Embodiment 1.

Communication system 1 includes CU 2, BBU 3 installed at a predetermined site, and a plurality of terminals 4 as illustrated in FIG 2. BBU 3 is connected to CU 2 by fronthaul, such as optical extension. CU 2 and BBU 3 may also be an integrated device. CU 2 and BBU 3 may collectively be referred to as "base station device NB." Base station device NB may also be referred to as "eNodeB." Also, CU 2 may be referred to as "aggregate base station" and BBU may be referred to as "signal processing section."

A plurality of terminals 4 include low-speed terminals 4L and high-speed terminals 4H. The data rate (transmission rate) of a UL signal of each of low-speed terminals 4L is lower than the data rate (transmission rate) of an UL signal of each of high-speed terminals 4H. The rate (e.g., data rate) of the UL signal of low-speed terminal 4L is guaranteed (e.g., a target rate is configured). The rate of the UL signal of high-speed terminal 4H is on a best effort basis (e.g., no target rate is defined).

BBU 3 includes a super multi-element antenna, and applies beamforming BF to receive the UL signals from terminals 4. An increased number of antenna elements leads to an increase in beamforming gain, resulting in an increase in received SNR of the UL signals. However, the increase in number of antenna elements is limited by various causes such as restricted places for installing BBU 3, balance between the traffic demand and the production cost, and the like.

An increased transmit power of each of terminals 4 also leads to an increase in beamforming gain of BBU 3. However, it is not preferable to increase the transmit power of each of low-speed terminals 4L (e.g., IoT terminals) for which the power consumption is required to be low.

NPL 2 describes comparative verification between a case where a plurality of high-speed terminals and low-speed terminals are accommodated with respect to a base station device by Time Division Multiplexing (TDM) and a case where the high-speed terminals and low-speed terminals are accommodated with respect to the base station device by Space Division Multiplexing (SDM). In addition, NPL 2 describes that the TDM maintains orthogonality among the terminals but the radio-resource utilization ratio is relatively low in the case of the TDM, whereas the radio-resource utilization ratio is high but there is a concern about residual interference among the terminals after spatial division in the case of the SDM. NPL 2 also describes that the computer simulation performed taking into consideration these trade-offs and using actual propagation data shows a result that the SDM can achieve a comparatively high system throughput.

Accordingly, the present embodiment will be described in relation to a communication system in which the transmit powers of low-speed terminals 4L can be reduced when the UL signals are received from a plurality of terminals 4 with using the SDM.

### <Base Station Device>

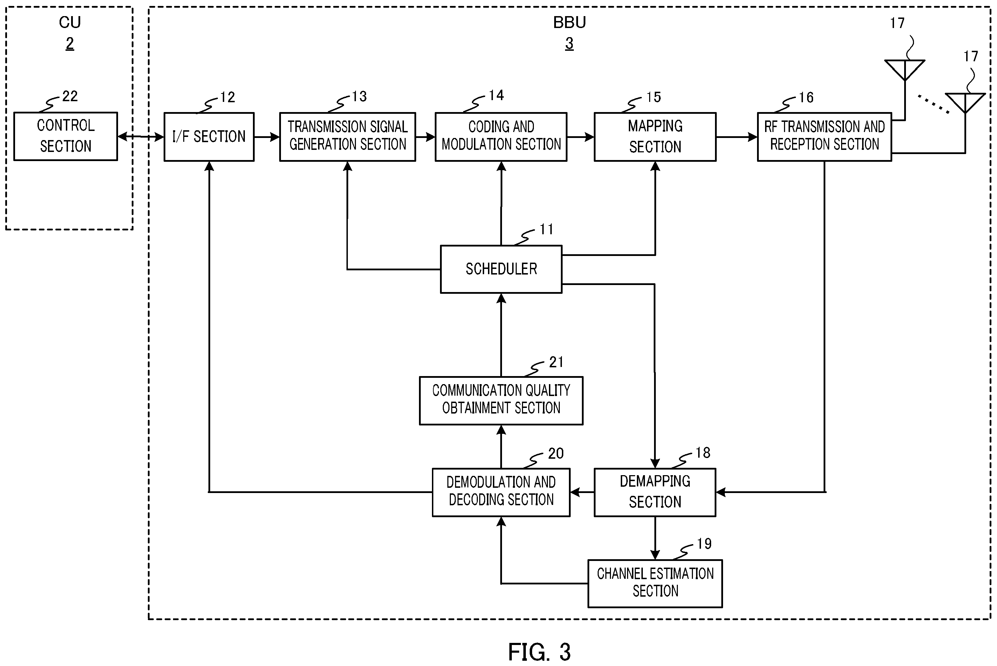

FIG 3 illustrates an example of a block configuration of base station device NB.

Base station device NB includes CU 2 and BBU 3 as illustrated in FIG 3. BBU 3 includes scheduler 11, Interface (I/F) section 12, transmission signal generation section 13, coding and modulation section 14, mapping section 15, Radio Frequency (RF) transmission and reception section 16, antenna element 17, demapping section 18, channel estimation section 19, demodulation and decoding section 20, and communication quality obtainment section 21. CU 2 includes control section 22. Note that, the arrangement of the blocks in CU 2 and in BBU 3 as illustrated in FIG 3 is an example, and a part of the blocks in BBU 3 may also be arranged in CU 2. For example, scheduler 11 and communication quality obtainment section 21 may be arranged in CU 2.

Scheduler 11 performs scheduling of a Downlink (DL) signal based on communication quality between base station device NB and each of terminals 4 as output from communication quality obtainment section 21. The DL signal includes the DL data signal and the DL control signal described above.

Scheduler 11 performs scheduling of a UL signal based on the communication quality between base station device NB and each of terminals 4 as output from communication quality obtainment section 21. The UL signal includes a UL data signal and a UL control signal.

Scheduler 11 determines a Modulation and Coding Scheme (MCS) and/or the like of the DL data signal and the UL data signal based on the communication quality between base station device NB and each of terminals 4 as output from communication quality obtainment section 21. As for the MCS, the present invention is not limited to the case where base station device NB configures the MCS, but terminal 4 may also configure the MCS. In the case where terminal 4 configures the MCS, base station device NB may receive the MCS information from terminal 4 (not illustrated).

I/F section 12 communicates with CU 2. I/F section 12 performs processing such as that related to a higher layer above the physical layer or the MAC layer, for example. I/F section 12 receives data to be transmitted to terminal 4 from CU 2, for example. I/F section 12 transmits data received from terminal 4 to CU 2.

Transmission signal generation section 13 generates the DL signal including the DL data signal and the DL control signal. The DL data signal included in the DL signal includes user data received by I/F section 12, for example. In addition, the DL control signal included in the DL signal includes scheduling information including radio-resource allocation information for the DL data signal and radio-resource allocation information for the UL data signal as generated by scheduler 11. The DL control signal included in the DL signal also includes Downlink Control Information (DCI) including the MCS information generated by scheduler 11.

Coding and modulation section 14 performs coding processing and modulation processing on the DL signal output from transmission signal generation section 13 based on the MCS information generated by scheduler 11.

Mapping section 15 maps the DL signal output from coding and modulation section 14 to predetermined radio resources (DL resources) based on the scheduling information generated by scheduler 11. Note that, mapping section 15 performs, based on the scheduling information generated by scheduler 11, precoding processing or BF processing or both of them on the DL signal when the DL signal is space-division multiplexed. Mapping section 15 also performs, based on the scheduling information generated by scheduler 11, Orthogonal Frequency Division Multiplexing (OFDM) processing on the DL signal when the DL signal is Frequency-Division Multiplexed.

RF transmission and reception section 16 performs transmission processing, such as upconversion, amplification, and the like on the DL signal output from mapping section 15, and transmits the DL signal to terminal 4 from a plurality of antenna elements 17. RF transmission and reception section 16 also performs reception processing, such as amplification, downconversion, and the like on the UL signal transmitted by terminal 4 and received by a plurality of antenna elements 17.

Demapping section 18 separates (demaps), based on the scheduling information (UL radio-resource allocation information) generated by scheduler 11, the UL data signal and the UL control signal of terminal 4 from the UL signal output from RF transmission and reception section 16.

Channel estimation section 19 estimates a UL channel state based on a reference signal included in the UL control signal demapped by demapping section 18.

Demodulation and decoding section 20 demodulates and decodes the UL control signal and the UL data signal demapped by demapping section 18 based on the channel state estimated by channel estimation section 19. The UL data signal demodulated and decoded by demodulation and decoding section 20 is transmitted to CU 2 by I/F section 12, for example.

Communication quality obtainment section 21 obtains DL communication quality between base station device NB and each of terminals 4 based on the UL control signal demodulated and decoded by demodulation and decoding section 20.

Control section 22 selects, from multiple terminals which transmit UL signals, a plurality of terminals 4 whose UL signals are space-division multiplexed using a plurality of antenna elements. In selecting such a plurality of terminals 4, control section 22 controls, depending on a target transmit power configured for low-speed terminals 4L, the ratio between the number of low-speed terminals 4L for which the target rate of the UL signal is defined and the number of high-speed terminals 4H for which no target rate of the UL signal is defined. For example, control section 22 increases the ratio of the number of low-speed terminals 4L when the transmit power of low-speed terminals 4L is greater than the target transmit power. Note that, the details of control section 22 will be described below.

### <Terminal>

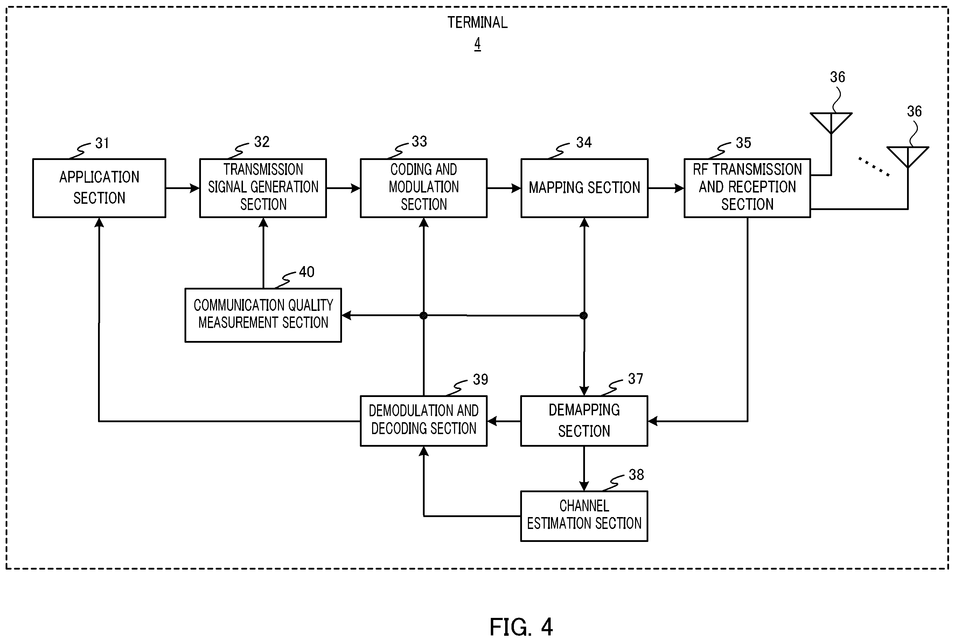

FIG 4 illustrates an example of a block configuration of terminal 4.

As illustrated in FIG 4, terminal 4 includes application section 31, transmission signal generation section 32, coding and modulation section 33, mapping section 34, RF transmission and reception section 35, antenna element 36, demapping section 37, channel estimation section 38, demodulation and decoding section 39, and communication quality measurement section 40.

RF transmission and reception section 35 performs reception processing, such as amplification, downconversion, and the like on the DL signal transmitted from base station device NB and received by a plurality of antenna elements 36.

Demapping section 37 separates (demaps) the DL control signal from the DL signal output from RF transmission and reception section 35. Demapping section 37 also separates (demaps) the DL data signal addressed to the corresponding terminal from the DL signal output from RF transmission and reception section 35 based on scheduling information (DL radio-resource allocation information) output from demodulation and decoding section 39.

Channel estimation section 38 estimates a DL channel state based on a reference signal included in the DL control signal demapped by demapping section 37.

Demodulation and decoding section 39 demodulates and decodes the DL control signal and the DL data signal demapped by demapping section 37 based on the channel state estimated by channel estimation section 38.

Demodulation and decoding section 39 outputs the DL schedule information included in the demodulated and decoded DL control signal to demapping section 37. Demodulation and decoding section 39 also outputs the UL schedule information (UL radio-resource allocation information) and the MCS information included in the demodulated and decoded DL control signal to coding and modulation section 33 and mapping section 34. Demodulation and decoding section 39 also outputs the reference signal included in the DL control signal to communication quality measurement section 40. Demodulation and decoding section 39 also outputs the demodulated and decoded DL data signal to application section 31.

Communication quality measurement section 40 measures DL communication quality based on the reference signal demodulated and decoded by demodulation and decoding section 39.

Application section 31 performs processing such as that related to a higher layer above the physical layer or the MAC layer, for example.

Transmission signal generation section 32 generates the UL signal including the UL data signal and the UL control signal. The UL data signal included in the UL signal includes the user data output from application section 31, for example. The UL control signal included in the UL signal includes the DL communication quality measured by communication quality measurement section 40.

Coding and modulation section 33 encodes and modulates the UL signal output from transmission signal generation section 32 based on the MCS information on the UL signal demodulated and decoded by demodulation and decoding section 39.

Mapping section 34 maps the UL signal output from coding and modulation section 33 to predetermined radio resources (UL resources) based on the scheduling information on the UL signal demodulated and decoded by demodulation and decoding section 39.

RF transmission and reception section 35 performs transmission processing, such as upconversion, amplification, and the like on the UL signal output from mapping section 34, and transmits the UL signal to BBU 3 from a plurality of antenna elements 36.

### <Space Division Multiplexing>

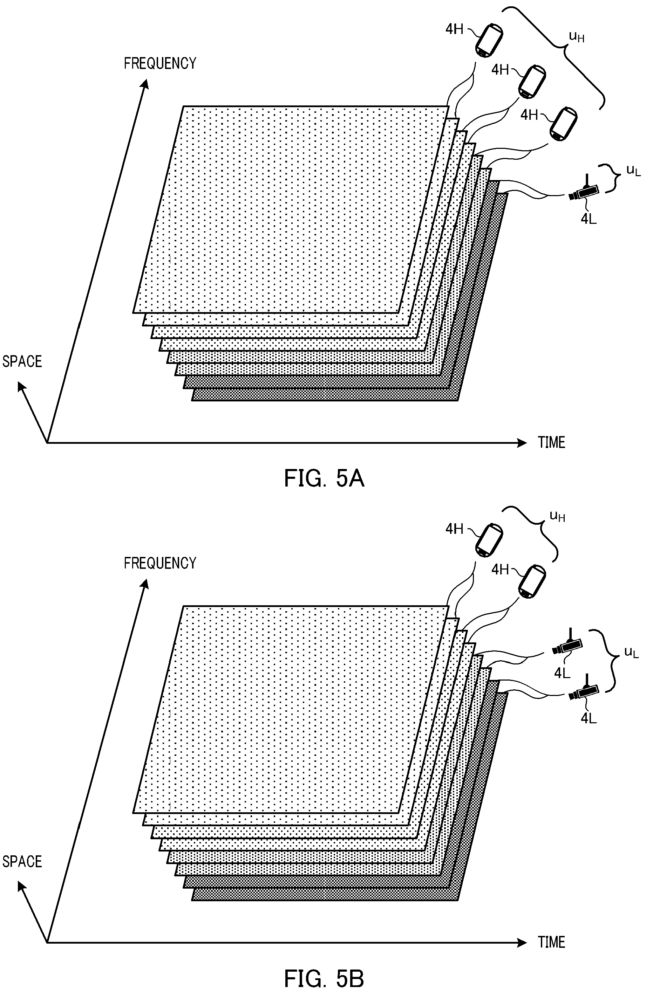

FIGS. 5A and 5B illustrate an example where a plurality of low-speed terminals 4L and a plurality of high-speed terminals 4H are accommodated by the SDM of multiuser MIMO. Next, a method for reducing the transmit power of low-speed terminals 4L according to the present embodiment will be described with reference to FIGS. 5A and 5B. Note that, the number of accommodated low-speed terminals 4L and the number of accommodated high-speed terminals 4H in a radio frame at a certain instance are expressed respectively by "u_{L}" and "u_{H}" in the description. Note also that, u_{L} low-speed terminals 4L may collectively be expressed as a low-speed terminal group and u_{H} high-speed terminals 4H may collectively be expressed as a high-speed terminal group.

By way of an example, one base station device NB can accommodate at least eight terminals 4 in a case where the number of transmission layers (the number of MIMO layers) assigned to one terminal 4 is two and the number of reception layers assigned to one base station device NB is 16.

Hereinbelow, for ease of description, descriptions will be given in relation to a case where one base station device NB accommodates maximum number MUₘₐₓ (= u_{L} + u_{H} = 8) of terminals 4. That is, when base station device NB increases u_{L}, base station device NB reduces u_{H} correspondingly (which corresponds to the example of the change from FIG 5A to FIG 5B), while on the contrary, when base station device NB increases u_{H}, base station device NB reduces u_{L} correspondingly (which corresponds to the example of the change from FIG 5B to FIG 5A). However, this is one example, and the present embodiment is also applicable to a case where u_{L} or u_{H} is increased or reduced.

The low-speed terminal group is configured with total target throughput TH₀ and average target transmit power P₀. Total target throughput TH₀ is a target value for the total of the throughputs of low-speed terminals 4L belonging to the low-speed terminal group. Average target transmit power P₀ is a target value for the average of the transmit powers of low-speed terminals 4L belonging to the low-speed terminal group. The low-speed terminal group transmits the UL signals such that at least total target throughput TH₀ is achieved at a transmit power equal to or less than average target transmit power P₀.

High-speed terminals 4H are configured with maximum transmit power Pₘₐₓ. High-speed terminals 4H transmit the UL signals such that the highest possible throughput (that is, best-effort throughput) is achieved at a transmit power equal to or less than maximum transmit power Pₘₐₓ.

To reduce the transmit powers of low-speed terminals 4L, at least the coding scheme or the modulation scheme of each of the UL signals may be changed such that the required SNR is lower. However, changing the coding scheme or the modulation scheme such that the required SNR is lower may causes a decrease in data rate, resulting in a total throughput of the low-speed terminal group that is less than total target throughput TH₀.

To prevent this, base station device NB changes the ratio between u_{H} and u_{L} for accommodation by the SDM depending on average target transmit power P₀ of the low-speed terminal group. For example, base station device NB increases the ratio of u_{L} for accommodation by the SDM (the ratio of u_{H} becomes relatively lower) when average transmit power P_{L} of the low-speed terminal group is greater than average target transmit power P₀. The number of transmission layers to be assigned to the low-speed terminal group thus increases. Therefore, total throughput TH_{L} that decreases when at least the coding scheme or the modulation scheme is changed such that the received SNR is higher can be increased to total target throughput TH₀ using this increased number of transmission layers.

Note that, although the throughputs of the low-speed terminal group are totaled and compared in the present embodiment, the throughput of each of low-speed terminals 4L may also be compared with the target throughput. Note also that, although the transmit powers of the low-speed terminal group are averaged and compared in the present embodiment, the transmit power of each of low-speed terminals 4L may also be compared with the target transmit power.

For example, base station device NB increases the ratio of u_{L} for accommodation by the SDM. Base station device NB then indicates, to the low-speed terminal group, that at least the coding scheme or the modulation scheme of the UL signals is changed to achieve a higher received SNR. This allows the low-speed terminal group to reduce average transmit power P_{L} while avoiding causing total throughput TH_{L} to fall below total target throughput TH₀.

In order to increase the received SNR using the coding scheme, the coding scheme may be changed to a coding scheme with a low coding rate (high error correcting capability), for example. Additionally, in order to increase the received SNR using the modulation scheme, the modulation scheme may be changed to a modulation scheme with a small number of bits per one symbol, for example.

Base station device NB may hold in advance a table for low-speed terminals (not illustrated) in which total target throughput TH₀ is associated with the coding scheme and modulation scheme for which average transmit power P_{L} is minimized and the received SNR is maximized, and base station device NB may determine the coding scheme and modulation scheme for low-speed terminals 4L using the table for low-speed terminals.

When total throughput TH_{L} of the low-speed terminal group is much greater than target total throughput TH₀, base station device NB may increase the ratio of u_{H} for accommodation by the SDM (the ratio of u_{L} becomes relatively lower) as long as TH_{L} does not fall below TH₀. The number of transmission layers to be assigned to high-speed terminals 4H thus increases. Accordingly, throughput TH_{H} of high-speed terminals 4H can be increased using this increased number of transmission layers.

Base station device NB may determine the coding scheme and modulation scheme for high-speed terminals 4H such that throughput TH_{H} of high-speed terminals 4H at u_{H} is maximized. In this case, base station device NB may hold in advance a table for high-speed terminals (not illustrated) in which a desired throughput is associated with the coding scheme and modulation scheme for which the received SNR is maximized at maximum transmit power Pₘₐₓ, and base station device NB may determine the coding scheme and modulation scheme for high-speed terminals 4H using the table for high-speed terminals.

The coding scheme and the modulation scheme mentioned above are examples of physical layer parameters for changing the received SNR. Base station device NB may change the received SNR using other physical layer parameters.

### <Summary of Embodiment 1>

According to Embodiment 1, base station device NB includes BBU 3 (reception point) including a plurality of antennas, and control section 22 that selects a plurality of terminals which transmit UL signals to be received while space-division multiplexed by the plurality of antennas. In selecting the plurality of terminals, control section 22 controls, depending on average target transmit power P₀ configured for the low-speed terminal group, the ratio between number u_{L} of accommodated low-speed terminals 4L and number u_{H} of accommodated high-speed terminals 4H.

Base station device NB can thus reduce average transmit power P_{L} of low-speed terminals 4L by increasing the ratio of u_{L}, while avoiding causing total throughput TH_{L} of the low-speed terminal group to fall below target total throughput TH₀.

### (Embodiment 2)

Embodiment 1 has been described in relation to communication system 1 in the case of a single site. Embodiment 2 will be described in relation to communication system 1 in a case of a plurality of sites. Note that, the block configurations of base station device NB and terminal 4 have already been described with reference to FIGS. 3 and 4, the descriptions of those block configurations will be omitted. Note also that, those descriptions which have already been given for Embodiment 1 may not be given for Embodiment 2.

### <System Configuration>

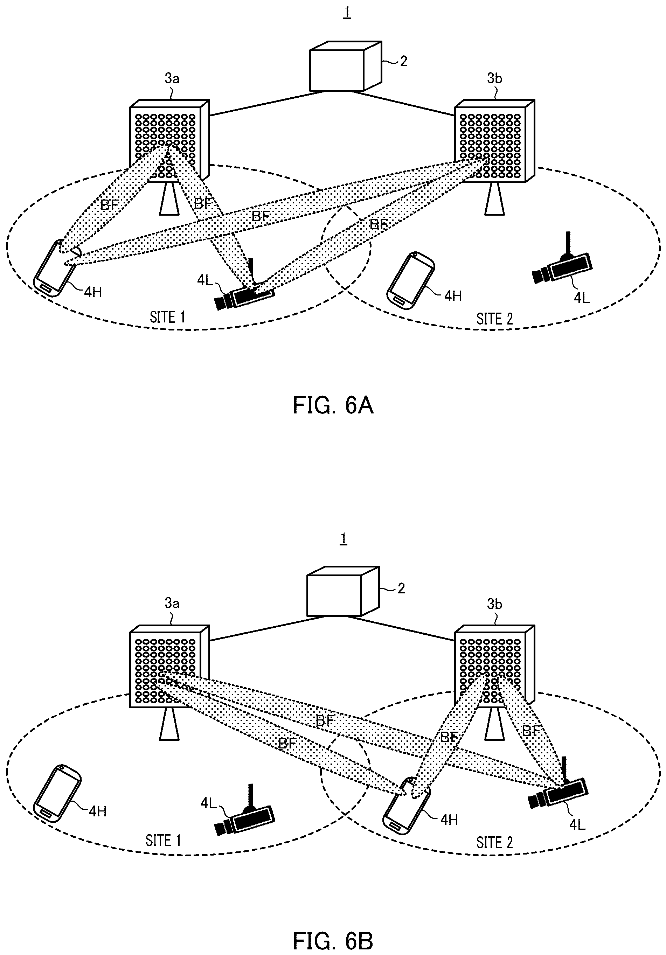

FIGS. 6A and 6B illustrate an example of a configuration of a communication system according to Embodiment 2.

As illustrated in FIGS. 6A and 6B, communication system 1 includes CU 2, a plurality of BBUs 3a and 3b respectively installed at a plurality of neighboring sites 1 and 2, and a plurality of terminals 4. BBUs 3 are connected to CU 2 by fronthaul, such as optical extension. CU 2 and BBUs 3 may also be referred to as "base station device NB," collectively. Base station device NB may also be referred to as "eNodeB."

In communication system 1 according to Embodiment 2, a UL signal from one of terminals 4 can be received by a plurality of coordinated BBUs 3a and 3b installed respectively at a plurality of neighboring sites 1 and 2, and aggregation of the UL signal at CU 2 can be achieved. This is called "site coordination." For example, BBU 3a at site 1 and BBU 3b at site 2 in coordination with each other receives the UL signal from low-speed terminal 4L in FIG 6A.

Communication system 1 with the site coordination can improve the received SNR by performing control on the amplitude and the phase, for example, by maximum ratio combination using propagation channel information as estimated separately.

Letting N_{R} denote the number of antenna elements of BBU 3 per one site, the number of antenna elements in a case of performing the site coordination between two sites is virtually 2N_{R} and the number of antenna elements in a case of performing the site coordination between four sites is virtually 4N_{R}. That is, performing the site coordination corresponds to virtually increasing the number of elements of a reception antenna.

In addition, since places where BBUs 3 that perform the site coordination are disposed are geographically different (distant) from one another, the site diversity effect can be expected more than in the case where the number of antenna elements at one site is increased.

That is, the received SNR may be increased more by performing the site coordination than in the case where no site coordination is performed. Accordingly, average transmit power P_{L} of the low-speed terminal group may be reduced by performing the site coordination.

However, when the site coordination is performed, BBUs 3 receive only the UL signals from terminals 4 belonging to one of the sites in a radio frame at a certain timing for avoiding interference. For example, when the site coordination is performed, BBUs 3a and 3b receive only the UL signals from terminals 4 belonging to site 1 in a radio frame at a certain timing as illustrated in FIG 6A and receive only the UL signals from terminals 4 belonging to site 2 in a radio frame at another certain timing as illustrated in FIG 6B. That is, when the site coordination is performed, the frequency reuse between cells becomes temporarily unavailable, resulting in a decrease in area spectral efficiency.

Therefore, it depends on total target throughput TH₀ and average target transmit power P₀ of the low-speed terminal group whether or not it is preferable to perform the site coordination. Further, the appropriate ratio of u_{L} described in Embodiment 1 may also be different.

### <Determination Method 1 for Determining u_{L} and Ns>

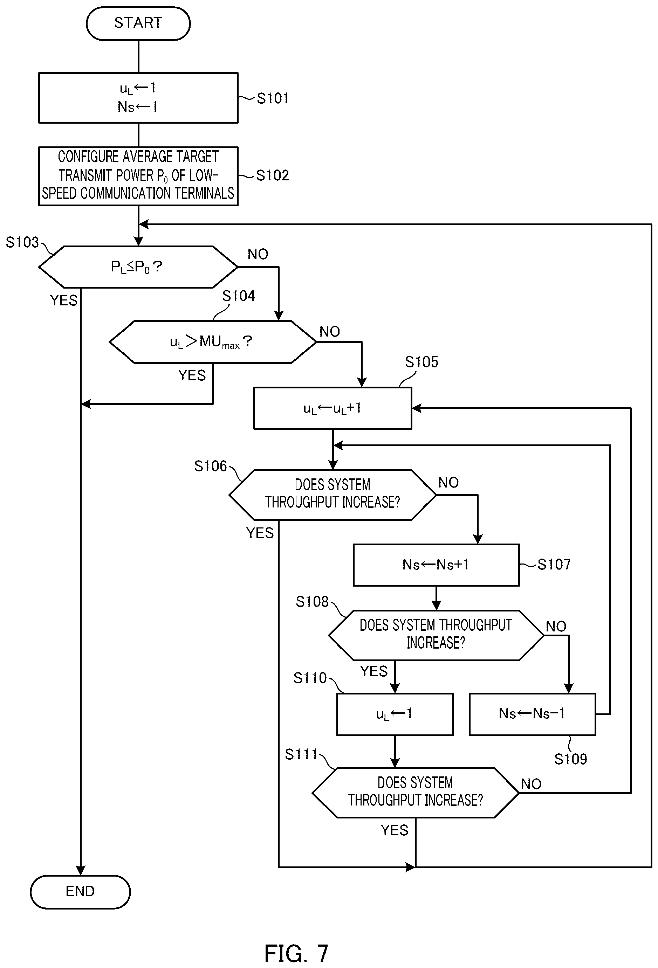

Next, with reference to the flowchart illustrated in FIG 7, a description will be given of an example of a method by base station device NB (CU 2) for determining number u_{L} of accommodated low-speed terminals 4L and number Ns of BBUs 3 that perform the site coordination. Note that, Ns = 1 indicates that the site coordination is not performed.

To begin with, control section 22 of CU 2 configures u_{L} to 1 and Ns to 1 (initializes u_{L} and Ns) (S101).

Next, control section 22 configures average target transmit power P₀ of the low-speed terminal group (S102). Average target transmit power P₀ may be defined in advance for each terminal class. That is, the low-speed terminal group may be configured with average target transmit power P₀ defined in advance for the terminal class to which the low-speed terminal group belongs.

Next, control section 22 determines whether or not average transmit power P_{L} of the low-speed terminal group is equal to or less than P₀ (S103).

When P_{L} ≤ P₀ (S103: YES), control section 22 ends the present process (END). When P_{L} > P₀ (S103: NO), control section 22 determines whether or not u_{L} is greater than maximum accommodable number MUₘₐₓ (S104).

When u_{L} > MUₘₐₓ (S104: YES), control section 22 ends the present process (END). When u_{L} ≤ MUₘₐₓ (S104: NO), control section 22 adds 1 to u_{L} (S105), and determines whether or not the throughput of the entire communication system (referred to as "system throughput") increases in that case (S106). Note that, control section 22 may compute the system throughput by collecting and totaling the throughputs of terminals 4 measured by communication quality obtainment section 21 of each of BBUs 3, for example.

When the determination result at S106 is "YES," the process returns to S103. When the determination result at S106 is "NO," control section 22 adds 1 to Ns (S107), and determines whether or not the system throughput increases in that case (S108).

When the determination result at S108 is "NO," control section 22 subtracts 1 from Ns (S109), and the process returns to S106. When the determination result at S108 is "YES," control section 22 configures u_{L} to 1 (S110), and determines whether or not the system throughput increases in that case (S111).

When the determination result at S111 is "NO," the process returns to S105. When the determination result at S111 is "YES," the process returns to S103.

That is, in the process described above, CU 2 (control section 22) increases number Ns of BBUs for site coordination when average transmit power P_{L} of the low-speed terminal group does not fall below average target transmit power P₀ even by increasing the ratio of number u_{L} of accommodated low-speed terminals 4L.

By the above process, CU 2 (control section 22) can determine number u_{L} of accommodated low-speed terminals 4L and number Ns of BBUs for site coordination for which average transmit power P_{L} of the low-speed terminal group is equal to or less than average target transmit power P₀ and the system throughput is maximized.

### <Determination Method 2 for Determining u_{L} and Ns>

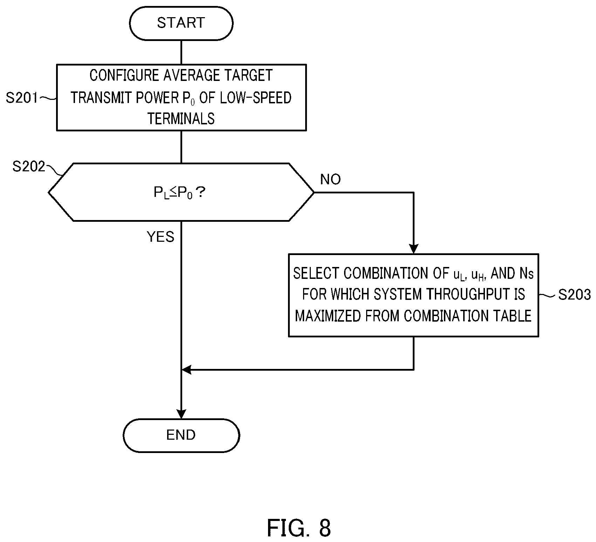

Next, with reference to the flowchart illustrated in FIG 8, a description will be given of another example of the method by base station device NB (CU 2) for determining u_{L} and Ns.

To begin with, control section 22 of CU 2 configures average target transmit power P₀ of the low-speed terminal group (S201).

Next, control section 22 determines whether or not average transmit power P_{L} of the low-speed terminal group is equal to or less than P₀ (S202).

When P_{L} ≤ P₀ (S202: YES), control section 22 ends the present process (END).

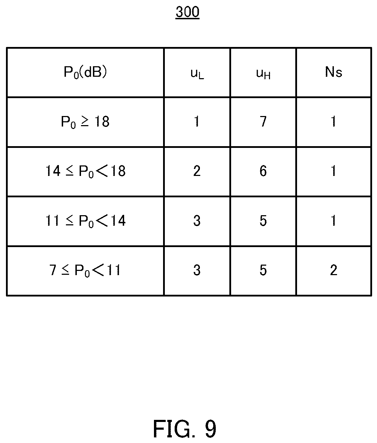

When P_{L} > P₀ (S202: NO), control section 22 selects, from combination table 300 illustrated in FIG 9, a combination of u_{L}, _{UH}, and Ns for which the system throughput is maximized at P₀ (S203), and ends the present process (END).

Next, a description will be given of combination table 300 with reference to FIG 9.

In combination table 300 as illustrated in FIG 9, target transmit powers P₀ of low-speed terminals 4L are associated in advance respectively with combinations of u_{L}, u_{H}, and Ns for which the system throughput is maximized. Note that, combination table 300 illustrated in FIG 9 is an example in the case of MUₘₐₓ = u_{L} + u_{H} = 8.

At S203 in FIG 8, control section 22 selects from combination table 300 the combination of u_{L}, u_{H}, and Ns associated with P₀ configured at S201. When P₀ is configured to 9, for example, control section 22 selects the combination of u_{L} = 3, u_{H} = 5, and Ns = 2 associated with the fourth row since P₀ = 9 corresponds to the fourth row in combination table 300.

It is thus possible to determine number u_{L} of accommodated low-speed terminals 4L, number u_{H} of accommodated high-speed terminals 4H, and number Ns of BBUs that perform the site coordination for which average transmit power P_{L} of the low-speed terminal group is equal to or less than average target transmit power P₀ and the system throughput is maximized.

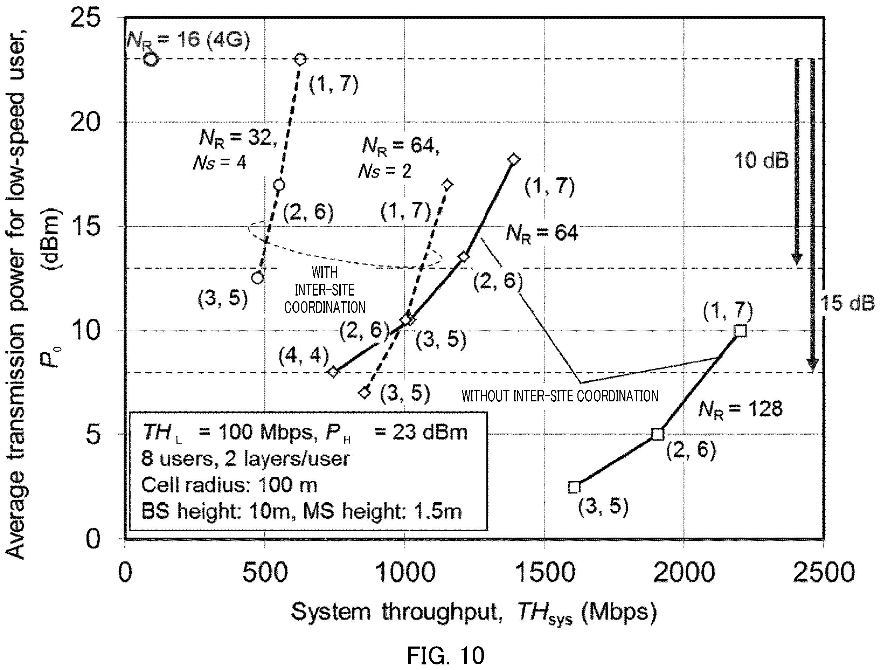

Next, with reference to a graph of a result of a computer simulation as illustrated in FIG 10, a description will be given of a relationship between the transmit powers of terminals 4 and the system throughput characteristics. Note that, actual measurement data in an indoor lobby environment is used for propagation channels in the computer simulation. The notations in the parentheses given respectively to plot points in FIG 10 indicate (u_{L}, u_{H}).

The graph of FIG 10 shows that relatively increasing u_{L} (increasing the ratio of u_{L}) leads to a decrease in average transmit power of the low-speed terminal group independently of whether or not the site coordination is performed. However, since relatively increased u_{L} causes a reduction in radio resources for high-speed terminals 4H, throughput TH_{H} of high-speed terminals 4H decreases, resulting in a decrease in system throughput TH_{sys}.

Next, with reference to FIG 10, a description will be given of a case where an average transmit power that is 10 dB lower than that in the conventional radio communication system (e.g., 4G) is configured as average target transmit power P₀ of the low-speed terminal group.

According to the graph of FIG 10, when number N_{R} of receive antenna elements is 128, it is possible to achieve P_{L} < P₀ at any u_{L}. In this case, when u_{L} is 1 (that is, smallest u_{L}), system throughput TH_{sys} is maximized.

As compared to this, in the case of N_{R} = 64 and when the site coordination is not performed (Ns = 1), it is not possible to achieve P_{L} < P₀ when u_{L} = 1 or 2, and u_{L} needs to be 3 or greater to achieve P_{L} < P₀. In addition, in the case of N_{R} ≤ 32, it is not possible to achieve P_{L} < P₀ when the site coordination is not performed. However, the site coordination is performed with Ns = 4, it is possible to achieve P_{L} < P₀ with u_{L} = 3 even when N_{R} = 32. That is, the average transmit power of the low-speed terminal group can be reduced by 10 dB.

As understood, performing the site coordination alleviates requirements relevant to the number of space-division multiplexed terminals of the low-speed terminal group. For example, in the case of N_{R} = 64 and when the site coordination is not performed, u_{L} needs to be 3 in order to achieve P_{L} < P₀, while u_{L} can be 2 when the site coordination is performed. That is, system throughput TH_{sys} may improve by performing the site coordination. However, as described above, only terminals 4 belonging to one certain site may be those which can obtain a transmission occasion in a radio frame at a certain timing when the site coordination is performed.

In addition, as understood from the slopes in the graph in FIG 10, the rate of an increase in system throughput made by reducing the ratio of u_{L} (by increasing the ratio of u_{H}) when the site coordination is performed is less than that made when the site coordination is not performed. That is, there is a trade-off between average transmit power P_{L} of the low-speed terminal group and system throughput TH_{sys}.

Therefore, the system throughput characteristics with respect to the average target transmit power of the low-speed terminal group may be derived in advance as illustrated in FIG 10, and base station device NB may select the optimal combination of u_{H} and Ns using the derived result.

For example, according to the graph of FIG. 10, when P_{L} < P₀ is to be achieved in the case of N_{R} = 64, the combination of "Ns = 1 (without site coordination) and u_{L} = 3" is preferable to the combination of "Ns = 2 (with site coordination) and u_{L} = 2" since system throughput TH_{sys} of the former combination is slightly higher than that of the latter combination at the same average transmit power P_{L}.

Similarly, according to the graph of FIG 10, in the case of N_{R} = 64 and when an average transmit power that is 15 dB lower than that in the conventional radio communication system (e.g., 4G) is configured as average target transmit power P₀ of the low-speed terminal group, the combination of "Ns = 2 (with site coordination) and u_{L} = 3" is preferable to the combination of "N = 1 (without site coordination) and u_{L} = 4" since transmit power P_{L} of the former combination is less than that of the latter combination and system throughput TH_{sys} of the former combination is higher than that of the latter combination.

### <Summary of Embodiment 2>

According to Embodiment 2, base station device NB includes BBUs 3 (reception point) including a plurality of antennas, and control section 22 that selects a plurality of terminals which transmit UL signals to be received while space-division multiplexed by the plurality of antennas. Then, in selecting the plurality of candidate terminals, control section 22 controls, depending on average target transmit power P₀ configured for the low-speed terminal group, the ratio between number u_{L} of accommodated low-speed terminals 4L and number u_{H} of accommodated high-speed terminals 4H and the number of BBUs 3 that perform the site coordination (the number of antennas for use in space-division multiplexing and reception).

Base station device NB can thus reduce average transmit power P_{L} of the low-speed terminal group while avoiding causing total throughput TH_{L} of the low-speed terminal group to fall below total target throughput TH₀ by increasing at least the ratio of u_{L} or number of Ns of BBUs that perform the site coordination.

The embodiments of the present disclosure have been described above.

### (Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

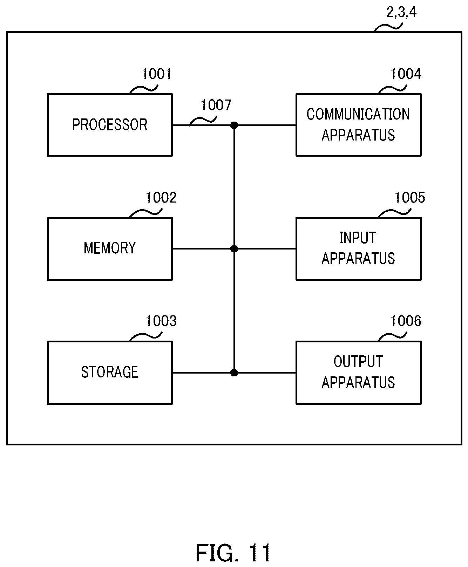

For example, CU 2, BBU 3, terminal 4, and the like according to one embodiment of the present disclosure may function as a computer that executes processing of a radio communication method of the present disclosure. FIG 11 illustrates an example of the hardware configuration of CU 2, BBU 3, and terminal 4 according to one embodiment of the present disclosure. CU 2, BBU 3, and terminal 4 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of CU 2, BBU 3, and terminal 4 may include one or more of the apparatuses illustrated in the drawings or may not include a part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in CU 2, BBU 3, and terminal 4 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, scheduler 11, transmission signal generation sections 13 and 32, coding and modulation sections 14 and 33, mapping sections 15 and 34, RF transmission and reception sections 16 and 35, demapping sections 18 and 37, channel estimation sections 19 and 38, demodulation and decoding sections 20 and 39, communication quality obtainment section 21, control section 22, application section 31, communication quality measurement section 40, and/or the like may be implemented by processor 1001. In addition, a necessary table may be stored in memory 1002.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, at least part of the functional blocks constituting CU 2, BBU 3, and terminal 4 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, RF transmission and reception sections 16 and 35, antenna elements 17 and 36, and/or the like described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, CU 2, BBU 3, and terminal 4 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB) and System Information Block (SIB)), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information or the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, Physical Uplink Control Channel (PUCCH) and Physical Downlink Control Channel (PDCCH)) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station", "eNB", "cell", and "sector" can be interchangeably used in the present specification. The base station may be called a fixed station, a NodeB, an eNodeB (eNB), an access point, a femto cell, a small cell, or the like.

### (Terminal)

The terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or a User Equipment (UE) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. The correction RS may be called a Tracking RS TRS), a Phase Compensation RS (PC-RS), a Phase Tracking RS (PTRS), or an additional RS. The demodulation RS and the correction RS may be called by other corresponding names, respectively. The demodulation RS and the correction RS may be specified by the same name (for example, demodulation RS).

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (Orthogonal Frequency Division Multiplexing (OFDM)) symbol, Single Carrier-Frequency Division Multiple Access (SC-FDMA) symbol, or the like) in the time domain.

The radio frame, the subframe, the slot, and the symbol indicate time units in transmitting signals. The radio frame, the subframe, the slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a Transmission Time Interval (TTI).

For example, one subframe, a plurality of continuous subframes, or one slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present specification. Modifications and variations of the aspects of the present disclosure can be made without departing from the scope of the present disclosure defined by the description of the appended claims. Therefore, the description of the present specification is intended for exemplary description and does not limit the present disclosure in any sense.

### Industrial Applicability

One aspect of the present disclosure is useful for a mobile communication system.

### Reference Signs List

1 Communication system
2 CU
3, 3a, 3b BBU
4, 4H, 4L Terminal
11 Scheduler
12 I/F section
13, 32 Transmission signal generation section
14, 33 Coding and modulation section
15, 34 Mapping section
16, 35 RF transmission and reception section
17, 36 Antenna element
18, 37 Demapping section
19, 38 Channel estimation section
20, 39 Demodulation and decoding section
21 Communication quality obtainment section
22 Control section
31 Application section
40 Communication quality measurement section
300 Combination table
NB Base station device

## Claims

1. A base station device (NB), comprising:
at least one reception point (3) that includes a plurality of antennas; and
a control section (22) configured to select a plurality of terminals (4) that transmit uplink signals to be received while space-division multiplexed by the plurality of antennas, wherein
the control section (22) is configured to control a ratio between a number of first terminals (4L) and a number of second terminals (4H) in selecting the plurality of terminals (4), the second terminals (4H) being terminals whose rate of the uplink signals is higher than a rate of the uplink signals of the first terminals (4L), the ratio being controlled depending on a target transmit power (P₀) configured for the first terminals (4L);
wherein:
controlling the ratio includes relatively increasing the number of the first terminals (4L) among the plurality of terminals (4); and
the control section (22) is configured to determine the number of the first terminals (4L) and a number of the reception points (Ns) to be coordinated, the number of the first terminals (4L) and the number of the reception points (Ns) to be coordinated being determined using information on a predetermined combination of the ratio and the number of the reception points to be coordinated, the predetermined combination being a combination for which a system throughput is maximized at the target transmit power according to a combination table (300) associating the target transmit power (P₀), the number of first terminals (4L), the number of second terminals (4H) and the number of the reception points (Ns).

2. The base station device (NB) according to claim 1, wherein
the rate of the uplink signals of the first terminals (4L) is guaranteed, by configuring a target rate.

3. The base station device (NB) according to claim 1, wherein
the control section (22) is configured to control, depending on the target transmit power, a number of antennas for use in the space division multiplexing by coordination with another reception point disposed at a place different from a place of the reception point (3).

4. The base station device (NB) according to claim 1, wherein
the control section (22) is configured to increase a number of the reception points to be coordinated, when increasing the ratio of the number of the first terminals (4L) does not cause a transmit power of the first terminals (4L) to be equal to or less than the target transmit power.

5. A communication method to be performed by a base station device (NB), the communication method comprising:
processing of receiving uplink signals that are space-division multiplexed by a plurality of antennas of a reception point (3); and
processing of controlling a ratio between a number of first terminals (4L) and a number of second terminals (4H) in selecting a plurality of terminals (4) that transmit the uplink signals, the second terminals (4H) being terminals whose rate of the uplink signals is higher than a rate of the uplink signals of the first terminals (4L), the ratio being controlled depending on a target transmit power configured for the first terminals (4L);
wherein controlling the ratio includes relatively increasing the number of the first terminals (4L) among the plurality of terminals (4);
the method further including determining the number of the first terminals (4L) and a number of the reception points to be coordinated, the number of the first terminals (4L) and the number of the reception points (Ns) to be coordinated being determined using information on a predetermined combination of the ratio and the number of the reception points (Ns) to be coordinated, the predetermined combination being a combination for which a system throughput is maximized at the target transmit power according to a combination table (300) associating the target transmit power (P₀), the number of first terminals (4L), the number of second terminals (4H) and the number of the reception points (Ns).

## Patentansprüche

1. Basisstationsvorrichtung (NB), umfassend:
mindestens einen Empfangspunkt (3), der eine Vielzahl von Antennen einschließt; und
einen Steuerabschnitt (22), der konfiguriert ist, eine Vielzahl von Endgeräten (4) auszuwählen, die Aufwärtsverbindungssignale übertragen, die durch die Vielzahl von Antennen räumlich multiplexiert empfangen werden, wobei
der Steuerabschnitt (22) konfiguriert ist, ein Verhältnis zwischen einer Anzahl erster Endgeräte (4L) und einer Anzahl zweiter Endgeräte (4H) beim Auswählen der Vielzahl von Endgeräten (4) zu regeln, wobei die zweiten Endgeräte (4H) Endgeräte sind, deren Datenrate der Aufwärtsverbindungssignale höher ist als eine Datenrate der Aufwärtsverbindungssignale der ersten Endgeräte (4L), wobei das Verhältnis abhängig von einer für die ersten Endgeräte (4L) konfigurierten Zielsendeleistung (P₀) geregelt wird;
wobei:
das Regeln des Verhältnisses ein relatives Erhöhen der Anzahl der ersten Endgeräte (4L) unter der Vielzahl von Endgeräten (4) einschließt; und
der Steuerabschnitt (22) konfiguriert ist, die Anzahl der ersten Endgeräte (4L) und eine Anzahl der zu koordinierenden Empfangspunkte (Ns) zu bestimmen, wobei die Anzahl der ersten Endgeräte (4L) und die Anzahl der zu koordinierenden Empfangspunkte (Ns) unter Verwendung von Informationen zu einer vorbestimmten Kombination des Verhältnisses und der Anzahl der zu koordinierenden Empfangspunkte bestimmt werden, wobei die vorbestimmte Kombination eine Kombination ist, für die eine Systemdurchsatzrate bei der Zielsendeleistung entsprechend einer Kombinationstabelle (300), die die Zielsendeleistung (P₀), die Anzahl der ersten Endgeräte (4L), die Anzahl der zweiten Endgeräte (4H) und die Anzahl der Empfangspunkte (Ns) zuordnet, maximiert ist.

2. Basisstationsvorrichtung (NB) nach Anspruch 1, wobei
die Datenrate der Aufwärtsverbindungssignale der ersten Endgeräte (4L) dadurch gewährleistet ist, dass eine Ziel-Datenrate konfiguriert wird.

3. Basisstationsvorrichtung (NB) nach Anspruch 1, wobei
der Steuerabschnitt (22) konfiguriert ist, abhängig von der Zielsendeleistung eine Anzahl von Antennen zur Verwendung bei der räumlichen Multiplexierung durch Koordination mit einem an einem von dem Empfangspunkt (3) verschiedenen Ort angeordneten weiteren Empfangspunkt zu regeln.

4. Basisstationsvorrichtung (NB) nach Anspruch 1, wobei
der Steuerabschnitt (22) konfiguriert ist, eine Anzahl der zu koordinierenden Empfangspunkte zu erhöhen, wenn ein Erhöhen des Verhältnisses der Anzahl der ersten Endgeräte (4L) nicht dazu führt, dass eine Sendeleistung der ersten Endgeräte (4L) gleich der Zielsendeleistung oder kleiner als diese ist.

5. Kommunikationsverfahren, das von einer Basisstationsvorrichtung (NB) durchgeführt wird, umfassend:
Verarbeiten des Empfangens von Aufwärtsverbindungssignalen, die durch eine Vielzahl von Antennen eines Empfangspunkts (3) räumlich multiplexiert sind; und
Verarbeiten des Regelns eines Verhältnisses zwischen einer Anzahl erster Endgeräte (4L) und einer Anzahl zweiter Endgeräte (4H) beim Auswählen einer Vielzahl von Endgeräten (4), die die Aufwärtsverbindungssignale übertragen, wobei die zweiten Endgeräte (4H) Endgeräte sind, deren Datenrate der Aufwärtsverbindungssignale höher ist als eine Datenrate der Aufwärtsverbindungssignale der ersten Endgeräte (4L), wobei das Verhältnis abhängig von einer für die ersten Endgeräte (4L) konfigurierten Zielsendeleistung geregelt wird;
wobei das Regeln des Verhältnisses ein relatives Erhöhen der Anzahl der ersten Endgeräte (4L) unter der Vielzahl von Endgeräten (4) einschließt;
wobei das Verfahren weiter das Bestimmen der Anzahl der ersten Endgeräte (4L) und einer Anzahl der zu koordinierenden Empfangspunkte einschließt, wobei die Anzahl der ersten Endgeräte (4L) und die Anzahl der zu koordinierenden Empfangspunkte (Ns) unter Verwendung von Informationen zu einer vorbestimmten Kombination des Verhältnisses und der Anzahl der zu koordinierenden Empfangspunkte (Ns) bestimmt werden, wobei die vorbestimmte Kombination eine Kombination ist, für die eine Systemdurchsatzrate bei der Zielsendeleistung entsprechend einer Kombinationstabelle (300), die die Zielsendeleistung (P₀), die Anzahl der ersten Endgeräte (4L), die Anzahl der zweiten Endgeräte (4H) und die Anzahl der Empfangspunkte (Ns) zuordnet, maximiert ist.

## Revendications

1. Dispositif de station de base (NB) comprenant :
au moins un point de réception (3) qui inclut une pluralité d'antennes ; et
une section de commande (22) configurée pour sélectionner une pluralité de terminaux (4) qui transmettent des signaux de liaison montante destinés à être reçus tout en étant multiplexés spatialement par la pluralité d'antennes, dans lequel
la section de commande (22) est configurée pour commander un rapport entre un nombre de premiers terminaux (4L) et un nombre de deuxièmes terminaux (4H) lors d'une sélection de la pluralité de terminaux (4), les deuxièmes terminaux (4H) étant des terminaux dont le taux des signaux de liaison montante est supérieur à un taux des signaux de liaison montante des premiers terminaux (4L), le rapport étant commandé en fonction d'une puissance de transmission cible (P₀) configurée pour les premiers terminaux (4L) ;
dans lequel :
la commande du rapport inclut une augmentation relative du nombre des premiers terminaux (4L) parmi la pluralité de terminaux (4) ; et
la section de commande (22) est configurée pour déterminer le nombre des premiers terminaux (4L) et un nombre des points de réception (Ns) destinés à être coordonnés, le nombre des premiers terminaux (4L) et le nombre des points de réception (Ns) destinés à être coordonnés étant déterminés en utilisant des informations relatives à une combinaison prédéterminée du rapport et du nombre des points de réception destinés à être coordonnés, la combinaison prédéterminée étant une combinaison pour laquelle un débit du système est maximisé au niveau de la puissance de transmission cible selon un tableau de combinaisons (300) associant la puissance de transmission cible (P₀), le nombre de premiers terminaux (4L), le nombre de deuxièmes terminaux (4H) et le nombre des points de réception (Ns).

2. Dispositif de station de base (NB) selon la revendication 1, dans lequel
le taux des signaux de liaison montante des premiers terminaux (4L) est garanti, par configuration d'un taux cible.

3. Dispositif de station de base (NB) selon la revendication 1, dans lequel
la section de commande (22) est configurée pour commander, en fonction de la puissance de transmission cible, un nombre d'antennes à utiliser dans le multiplexage spatial par coordination avec un autre point de réception disposé en un lieu différent d'un lieu du point de réception (3).

4. Dispositif de station de base (NB) selon la revendication 1, dans lequel
la section de commande (22) est configurée pour augmenter un nombre de points de réception destinés à être coordonnés, lorsque l'augmentation du rapport du nombre des premiers terminaux (4L) n'amène pas une puissance de transmission des premiers terminaux (4L) à être égale ou inférieure à la puissance de transmission cible.

5. Procédé de communication destiné à être mis en œuvre par un dispositif de station de base (NB), le procédé de communication comprenant :
un traitement de réception de signaux de liaison montante qui sont multiplexés spatialement par une pluralité d'antennes d'un point de réception (3) ; et
un traitement de commande d'un rapport entre un nombre de premiers terminaux (4L) et un nombre de deuxièmes terminaux (4H) lors d'une sélection d'une pluralité de terminaux (4) qui transmettent les signaux de liaison montante, les deuxièmes terminaux (4H) étant des terminaux dont le taux des signaux de liaison montante est supérieur à un taux des signaux de liaison montante des premiers terminaux (4L), le rapport étant commandé en fonction d'une puissance de transmission cible configurée pour les premiers terminaux (4L) ;
dans lequel la commande du rapport inclut une augmentation relative du nombre des premiers terminaux (4L) parmi la pluralité de terminaux (4) ;
le procédé incluant en outre une détermination du nombre des premiers terminaux (4L) et d'un nombre des points de réception destinés à être coordonnés, le nombre des premiers terminaux (4L) et le nombre des points de réception (Ns) destinés à être coordonnés étant déterminés en utilisant des informations relatives à une combinaison prédéterminée du rapport et du nombre des points de réception (Ns) destinés à être coordonnés, la combinaison prédéterminée étant une combinaison pour laquelle un débit du système est maximisé au niveau de la puissance de transmission cible selon un tableau de combinaisons (300) associant la puissance de transmission cible (P₀), le nombre de premiers terminaux (4L), le nombre de deuxièmes terminaux (4H) et le nombre des points de réception (Ns).
